Europäisches Patentamt

European Patent Office

Office européen des brevets

(19)

(11) Publication number: **0 331 366**
**A1**

## (12) EUROPEAN PATENT APPLICATION

(21) Application number: **89301833.3**

(22) Date of filing: **24.02.89**

(51) Int. Cl.4: **F16D 65/16 , F16D 55/224**

(30) Priority: **25.02.88 GB 8804472**

(43) Date of publication of application:
**06.09.89 Bulletin 89/36**

(84) Designated Contracting States:
**DE FR GB IT SE**

(71) Applicant: **LUCAS INDUSTRIES public limited company**
**Great King Street**
**Birmingham, B19 2XF West Midlands(GB)**

(72) Inventor: **Margetts, Hugh Grenville**
**26 Redwood Close**
**Ross-on-Wye Herefordshire, HR9 5UD(GB)**
Inventor: **Sturgess, Peter George**
**47 Ordsall Road**
**Retford Notts, DN22 7PW(GB)**
Inventor: **Rees, David, Lloyd**
**97, Cwrt-yr-ala Road, Lauriston Park, Caerau**
**Cardiff, CF5 5QR Wales(GB)**

(74) Representative: **Stringer, David Hiram et al**
**W.P. THOMPSON & CO Coopers Building**
**Church Street**
**Liverpool L1 3AB(GB)**

(54) Improvements relating to lever mechanisms.

(57) The present specification discloses a lever and roller mechanism for use in a brake actuator (9,13,11), the mechanism including an eccentric which is rotatable about an axis by a lever (31), the eccentric coaxially supporting a freely rotatable annular roller (17) by means of which the eccentric can transfer lever movement to the brake actuator (9,13,11). To prevent the ingress of dirt onto the bearing surfaces a protective boot has been used. However this can easily be damaged allowing the ingress of dirt, etc.

The present invention provides a lever and roller mechanism comprising a shaft assembly (15) which is rotatably supported between two arms (3,5). The shaft assembly (15) comprises a cylindrical section (19) and an enlarged diameter section (21) with a lever (31) extending generally radially from said enlarged diameter section (21). The cylindrical section (19) forms the eccentric and rotatably carries an annular roller (17), resilient means (35) biassing the annular roller (17) and said enlarged diameter section (21) apart so that the annular roller (17) is pressed against one of the arms (3,5) and said enlarged diameter section (21) is pressed against the other of the arms (3,5). In this way the bearing surfaces (25a,25b) are sealed.

# IMPROVEMENTS RELATING TO LEVER MECHANISMS.

The present invention relates to a lever mechanism.

In particular the present invention relates to a lever and roller mechanism for use in a brake actuator, the roller mechanism including an eccentric which is rotatable about an axis by the lever, the eccentric coaxially supporting a freely rotatable annular roller by means of which the eccentric can transfer lever movement to the brake actuator. In a known form of such a roller mechanism the eccentric is rotatably supported between two arms of the brake actuator housing. To provide protection a large convoluted flexible boot has been used to completely cover the moving parts, with only the lever projecting from the boot. Such a boot can, of course, be relatively easily damaged by, for example, flying road debris.

The aim of the present invention is to provide a lever mechanism which is relatively cheap to manufacture, and wherein the relative movable parts are simply sealed against the ingress of extraneous material without the need for a flexible protective boot.

According to the present invention there is provided a lever and roller mechanism comprising a shaft assembly which is rotatably supported between two arms, the shaft assembly comprising a cylindrical section and an enlarged diameter section with a lever extending generally radially from said enlarged section, an annular roller being rotatably carried on said cylindrical section with resilient means biasing said annular roller and said enlarged diameter section apart, so that said annular roller is pressed against one of said arms and said enlarged diameter section is pressed against the other of said arms.

With this construction a lubricant can be introduced between the annular roller and said cylindrical section, the pressure of the annular roller and enlarged diameter section on said arms, and the provision of a sealing O-ring between the annular roller and said enlarged diameter section, keeping leakage to a minimum. Further to reduce friction forces and allow for required operation, the annular roller and enlarged diameter section preferably each have an axially extending annular lip of reduced radial thickness, said lips engaging respective arms, with minimal clearance therebetween.

In one embodiment of the present invention the lever and roller mechanism is for use in a brake actuator and the cylindrical section and enlarged diameter section are formed coaxially with respect to each other, as a unitary construction, with an axially extending bore extending through said sections offset from the longitudinal axis thereof. Said cylindrical section thus forms an eccentric. An elongate bearing shaft extends through said bore and is fixedly supported in apertures in said arms. A lubricant passage extends through said enlarged diameter section from a grease nipple on the outside of the enlarged diameter section to said axially extending bore and a further lubricant passage extends between said bore and the outer surface of said cylindrical section. Thus a single application of lubricant aids both the rotation of the eccentric on the bearing shaft and the rotation of the roller on a bearing on the eccentric. In use movement of the lever rotates the eccentric causing the roller to apply axial force to the brake actuator. This embodiment is intended for use in a normally hydraulically actuated brake, with the lever and roller mechanism providing brake facility.

In a further embodiment of the present invention, also for use in a brake actuator, the cylindrical section and enlarged diameter section are again formed coaxially with respect to each other, as a unitary construction, with an offset axially extending bore extending therethrough. However, the elongate bearing shaft extends as a snug fixed fit through said bore and has an enlarged diameter at one end region. This enlarged diameter end region rests in a bearing in one of said arms and is of similar diameter to said cylindrical section. An annular ring is engaged over the other end of the elongate bearing shaft and can be a press fit on said shaft. To positively retain this annular ring on said shaft a clip or screw is preferably used. The annular ring rests in a bearing in the other of said arms and is also of similar diameter to said cylindrical section. The roller is rotatably located in the cylindrical section with an annular bearing located therebetween, the diameter of all said bearings being preferably similar if not the same, with the axial extent of each of the bearings in said arms being approximately half the axial extent of the bearing between the cylindrical section and said roller. By this construction the optimum bearing area is achieved in the smallest volume. Lubricant is preferably introduced via a passage in said one arm, into the journal around the enlarged diameter end region of the bearing shaft, and as a result of approximately similar diameters the lubricant can pass between the roller and cylindrical section, and via a further lubricant passage, into the other journal.

In a still further embodiment of the present invention, again for use in a brake actuator, the cylindrical section and enlarged diameter section are two separate parts which are dowelled together, thus further facilitating manufacture. The lubricant passage extends through the enlarged diameter section and said cylindrical section to the surface of said cylindrical section under the roller, an annular gearing being located between the roller and said cylindrical section. The elongate bearing shaft extends as a snug fit through an offset axially extending bore in said parts and carries a cylindrical bearing member at each end, each cylindrical bearing member being of similar diameter to the diameter of said cylindrical section and engaging in suitable bearings in each said arm. These bearings are of similar diameter to the diameter of said annular bearing and each of the bearings in said arms are approximately half the axial length of said annular bearing, the bearings in said arms being positioned approximately equidistant about the load centre line through the actuator and roller, so as to achieve the optimum bearing area, and to produce equal bearing stress and uniform bearing life.

The last mentioned two embodiments are previously intended for use in a mechanically actuated brake. However these embodiments could also be used in a hydraulically actuated brake.

The present invention thus provides a lever and roller mechanism which is itself sealed against the ingress of foreign matter without the need for a flexible protective boot, different advantageous bearing arrangements for use in the present invention being outlined hereabove.

In any of the above embodiments or any other embodiment within the scope of the present invention, seals e.g. V-ring seals, may be provided between the annular roller and adjacent arm, and between the said enlarged diameter section and adjacent arm, to further provide protection for the bearing surfaces. Similarly a rubber ring seal may be provided over the gap between the annular roller and enlarged diameter section.

The present invention will now be further described, by way of example, with reference to the accompanying drawings, in which:-

Fig. 1 is a cross-sectional view of a brake actuator incorporating one embodiment of a lever and roller mechanism constructed according to the present invention;

Fig. 2 is a cross-sectional view of a brake actuator incorporating a further embodiment of a lever and roller mechanism constructed according to the present invention;

Fig. 3 is a cross-sectional view of a brake actuator incorporating a still further embodiment of a lever and roller mechanism constructed according to the present invention; and

Fig. 4 is a cross-sectional view of a brake actuator incorporating a modified form of the lever and roller mechanism of Fig. 3.

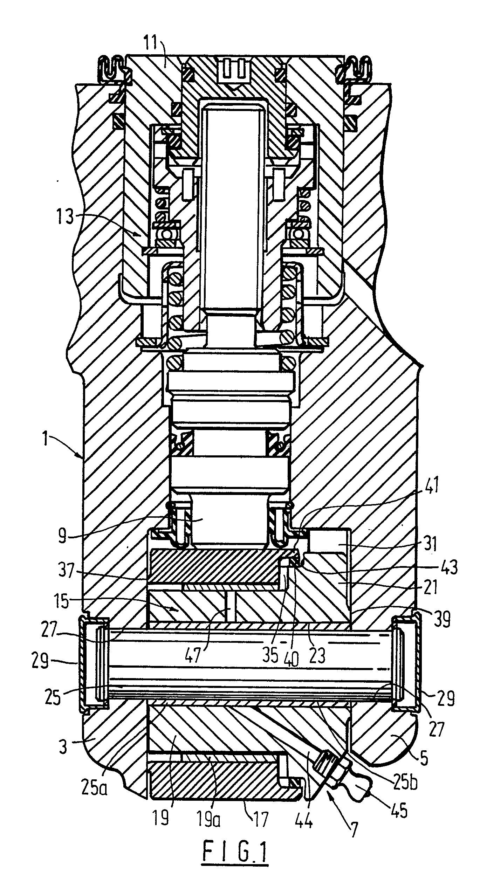

The brake actuator illustrated in Fig.1 of the accompanying drawings comprises an actuator housing 1 having two parallel arms 3, 5 between which one embodiment of a lever and roller mechanism 7 constructed according to the present invention is located. The lever and roller mechanism 7 engages with an actuator shaft 9 and can thus be used to apply a piston 11 against a friction pad (not shown) via an adjuster mechanism 13.

The lever and roller mechanism 7 comprises a shaft assembly 15 and an annular roller 17. The shaft assembly 15 comprises a cylindrical section 19 and an enlarged diameter section 21 which is coaxially formed with said cylindrical section 19 as a unitary construction. The shaft assembly 15 fits with clearance between the arms 3, 5 and has an offset, axially extending bore 23 extending therethrough. Said cylindrical section 19 is rotatably carried on an elongate bearing shaft 25 which is journalled by way of bearings 25a, 25b in said bore 23, the shaft 25 being of uniform diameter throughout its length with the ends of said shaft 25 being fixedly retained in apertures 27 in said arms 3, 5, said apertures 27 being sealed by plugs 29. Said cylindrical section 19 thus forms an eccentric so that as a lever 31 integral with and extending radially of, said enlarged diameter section 21, is moved over a curved path the eccentric applies an axial force to the actuator shaft 9 via the annular roller 17 which is freely rotatably carried on said cylindrical section 19, by way of annular bearing 19a.

To take up manufacturing tolerances and seal the roller mechanism 7 against the ingress of foreign matter, resilient means in the form of an annular wavy spring 35 is located between an axial end face of the annular roller 17 and the adjacent axial end face of the enlarged diameter section 21. This spring 35 biasses the annular roller 17 and the enlarged diameter section 21 axially apart and presses the annular roller 17 against one arm 3 and the enlarged diameter section 21 against the other arm 5. To reduce frictional forces between the annular roller 17 and said one arm 3, and thus aid operation, the roller 17 has an axially projecting annular lip 37 which has a reduced radial thickness, this lip 37 alone engaging the arm 3. Likewise, an annular lip 39 is provided on the enlarged diameter section 21. Further, to protect the spring 35 and completely seal the roller mechanism, an O-ring seal 40 is located between an axially extending rim 41 of the annular roller 17 and an annular recess 43 of the enlarged diameter section 21, which the rim 41 overhangs.

A lubricant passage 44 extends from a nipple 45 on the outside of the enlarged diameter section 21, to the bore 23, and a further lubricant passage 47 extends from the bore 23 to the outer surface of the cylindrical section 19 underneath the annular roller 33. Thus lubricant can be easily fed to all bearing surfaces via nipple 45, with a proportion of lubricant reaching the region of the lips 37, 39.

The accurate interengagement of the various moving parts of the roller mechanism prevents the ingress of foreign matter and thus obviates the need for a flexible protective boot; the use of the spring avoiding the need for accurate and expensive manufacture except for the required accurate machining of the sealingly interengaging faces of the arms 3, 5 and said lips 37, 39. It will be understood that any suitable resilient means can be used as an alternative to the spring 35.

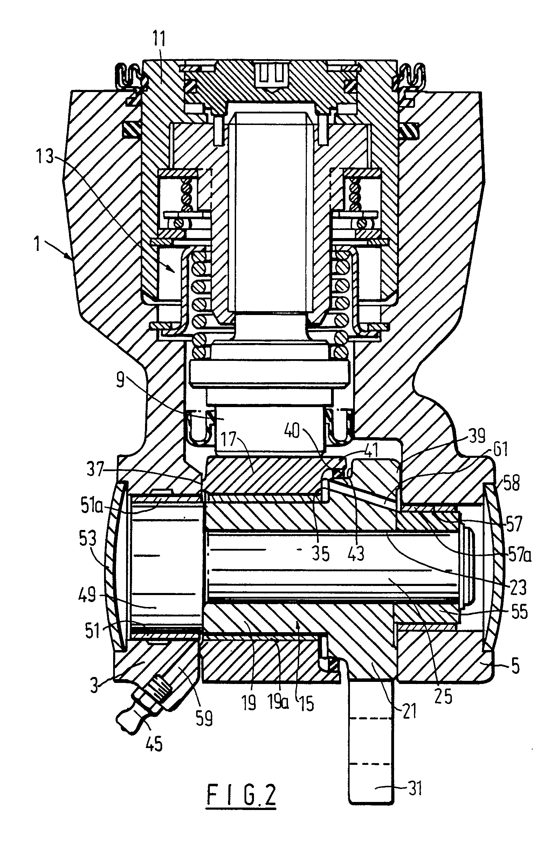

Alternative embodiments of lever and roller mechanism 7 are shown in Figs. 2, 3 and 4 of the accompanying drawings, and equivalent parts will be identified by the same reference numerals as used in Fig.1. Basically the construction of the shaft assembly 15 with a cylindrical section 19 and an enlarged diameter section 21, with an offset bore 23 extending axially therethrough, is the same in the embodiments of Figs. 2, 3 and 4, as in the embodiment of Fig.1. Likewise the provision of the annular roller 17 and spring 35 is the same. The differences lie in the bearing arrangements.

In the embodiment of Fig.2 the bearing shaft 25 is a snug fit in the bore 23 and has an enlarged diameter end region 49 with a diameter approximately the same as the diameter of said cylindrical section 19. This enlarged end region 49 rests an aperture 51 in one arm 3 with a bearing 51a therebetween, the aperture 51 being closed by cap 53. The bearing 51a and the bearing 19a between the roller 17 and cylindrical section 19, are of like diameter with the axial length of a bearing 51a being approximately half the axial length of bearing 19a. A bearing ring 55 engages over the other end region of the bearing shaft 25 and is a press fit thereon. If necessary a clip or screw can positively retain the bearing ring 55 in position. The bearing ring 55 is also of approximately the same diameter as said cylindrical section 19, the bearing ring 55 resting an aperture 57 in the other arm 5, with a bearing 57a therebetween, the aperture 57 being closed by a cap 58. Bearing 57a is of similar diameter to the diameter of bearing 19a and of approximately half the axial length. With this overall bearing construction the optimum bearing area is achieved with the smallest volume.

To lubricate the bearings and the axial end faces of the roller 17 and enlarged diameter section 21, on which said lips 37, 39 are formed, a lubricant passage 59 extends from a nipple 45 on the arm 3 to the aperture 51 and then to the surface of the cylindrical section 19. A further lubricant passage 61 extends through the enlarged diameter section to the other aperture 57.

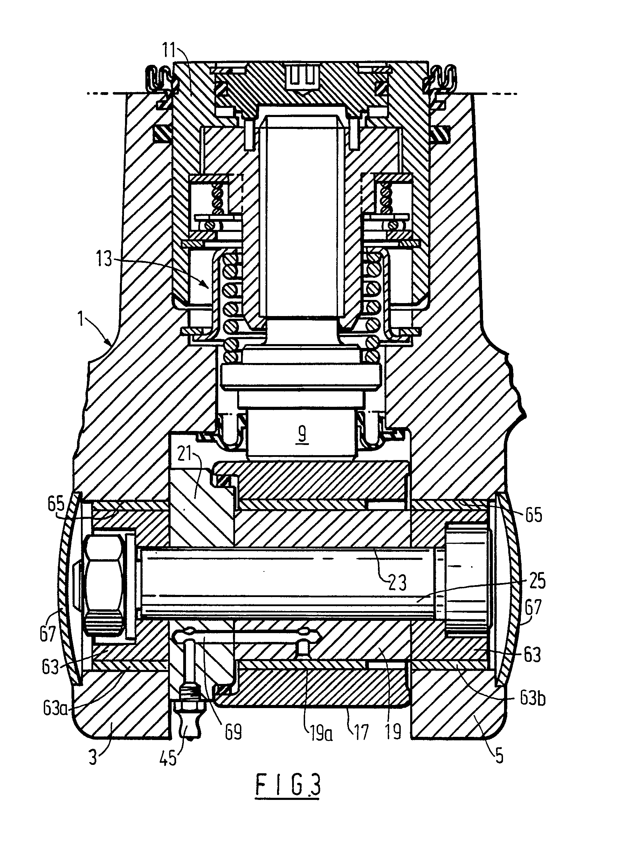

In the embodiment of Fig.3 the aim is to produce equal bearing stress and uniform bearing life. To do this, like cylindrical bearing rings 63 are secured on each end region of the bearing shaft 25, the shaft 25 again being a snug fit in the bore 23. Each cylindrical bearing ring 63 rests an aperture 65 in an arm 3, 5, with bearings 63a, 63b therebetween, the apertures 65 being closed by caps 67. The bearing rings 63 each have a diameter equal to the diameter of said cylindrical section 19, and bearings 63a, 63b each have a diameter similar to the diameter of annular bearing 19a between the roller 17 and said cylindrical section 19, with an axial extent approximately half the axial length of said annular bearing 19a. Further, the bearing rings 63 and bearings 63a, 63b are located approximately equidistant about the load centre of the roller mechanism, i.e. equi-spaced in each side of the axis of the actuator shaft 9. To lubricate this bearing arrangement a lubrication passage 69 extends from a nipple 45 on the enlarged diameter section 21 radially and then axially of the enlarged diameter section 21 and then through said cylindrical section 19, first axially and then radially, to open under the annular roller 33 on the surface of said cylindrical section 19. To facilitate manufacture of this lubricant passage 69, the enlarged diameter section 21 and the cylindrical section 19 are separate parts fixed on the bearing shaft 25 and dowelled together to align the sections of the lubricant passage 69.

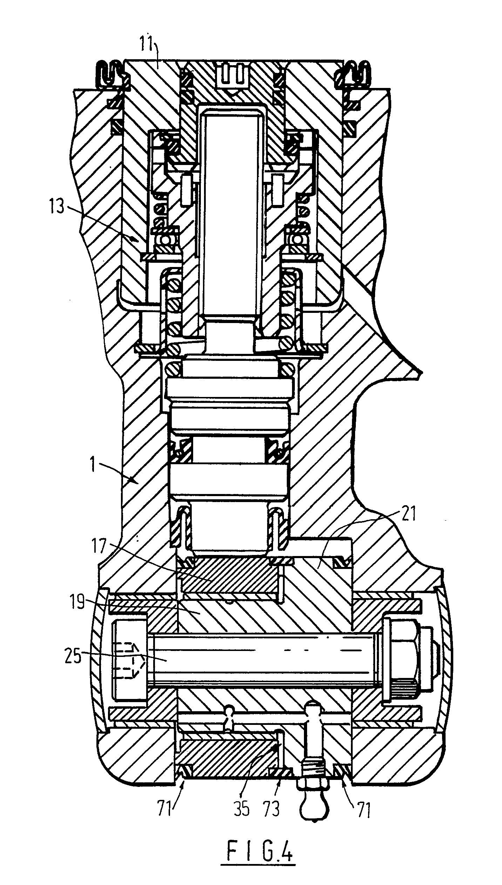

A modified form of the lever and roller mechanism of Fig. 3 is illustrated in Fig. 4, the differences lying in the construction of the cylindrical section 19 and the enlarged diameter section 21 as a unitary construction and in the provision of seals 71, 73. Seals 71 are annular V-ring seals, one seal 71 being located between the roller 17 and the arm 3 and the other seal 71 being located between the enlarged diameter section 21 and the other arm 5. Additionally, to further protect the bearing surfaces an annular rubber ring seal 73 bridges the gap between the roller 17 and the enlarged diameter section 21. V-ring seals 71 and/or rubber ring seal 73 can be used, as required, on any of the other above-described embodiments of the present invention or on any other embodiment of the present invention.

The present invention thus provides a lever and roller mechanism which is especially useful if desired as an eccentric to provide a camming arrangement on, for example, a brake actuator, the mechanism being sealed against the ingress of foreign matter without the need for a flexible protective boot.

## Claims

1. A lever and roller mechanism characterised by a shaft assembly (15) which is rotatably supported between two arms (3,5), the shaft assembly (15) comprising a cylindrical section (19) and an enlarged diameter section (21) with a lever (31) extending generally radially from said enlarged diameter section (21), an annular roller (17) being rotatably carried on said cylindrical section (19) with resilient means (35) biassing said annular roller (17) and said enlarged diameter section (21) apart, so that said annular roller (17) is pressed against one of said arms (3,5) and said enlarged diameter section (21) is pressed against the other of said arms (3,5).

2. A mechanism as claimed in claim 1, wherein the annular roller (17) has an axially extending annular lip (37) of reduced radial thickness, said lip (37) engaging an arm (3).

3. A mechanism as claimed in claim 1 or claim 2, wherein said enlarged diameter section (21) has an axially extending lip (39) which engages an arm (5).

4. A mechanism as claimed in claim 1, 2 or 3, wherein a sealing ring (40) is provided between the annular roller (17) and said enlarged diameter section (21).

5. A mechanism as claimed in claim 4, wherein the sealing ring (40) is located between an axially extending rim (41) of the annular roller (17) and an annular recess (43) of the enlarged diameter section (21), which the rim (41) overhangs.

6. A mechanism as claimed in any one of claims 1 to 5, wherein the cylindrical section (19) and enlarged diameter section (21) are formed coaxially with respect to each other, as a unitary construction, with an axially extending bore (23) extending through said sections (19,21) offset from the longitudinal axis thereof.

7. A mechanism as claimed in claim 6, wherein an elongate bearing shaft (25) extends through said bore (23) and is fixedly supported in apertures (27) in said arms (3,5).

8. A mechanism as claimed in claim 7, wherein a bearing (25a,25b) is provided between the elongate bearing shaft (25) and the shaft assembly (17,19,21).

9. A mechanism as claimed in claim 6, wherein an elongate bearing shaft (25) extends as a snug fit through said bore (23) and is journalled in a bearing (51a,57a) provided in each of said arms (3,5), the elongate bearing shaft (25) having an enlarged diameter section (49) at one axial end region, which section (49) rests in the bearing (51a) in one of said arms (3) and is of similar diameter to said cylindrical section (19).

10. A mechanism as claimed in claim 9, wherein an annular ring (55) is engaged over and secured on the other end region of the elongate bearing shaft (25), the annular ring (55) in a bearing (57a) in the other of said arms (5) and being also of similar diameter to said cylindrical section (19).

11. A mechanism as claimed in claim 10, wherein a bearing (19a) is provided between the annular roller (17) and said cylindrical section (19), with the diameter of all said bearings (51a,57a,19a) being at least similar and the axial extent of each of said bearings (51a,57a) approximately half the axial extent of the bearing (19a) between the cylindrical section (19) and said roller (17).

12. A mechanism as claimed in any one of claims 1 to 5, wherein the cylindrical section (19) and enlarged diameter section (21) are two separate parts which are connected to each other so that they rotate together, a bore (23) extending axially therethrough though offset from the longitudinal axis thereof.

13. A mechanism as claimed in claim 12, wherein an elongate bearing shaft (25) extends as a snug fit through said bore (23) and carries a cylindrical bearing member (63) at each end, each cylindrical bearing member (63) being of similar diameter to the diameter of said cylindrical section (19) and engaging in suitable bearings (63a,63b) in each said arm (3,5).

14. A mechanism as claimed in claim 13, wherein an annular bearing (19a) is located between said cylindrical section (19) and said roller (17), the bearings (63a,63b) in each arm being of similar diameter to the diameter of said annular bearing (19a) and being each of approximately half the axial length of said annular bearing (19a).

15. A mechanism as claimed in claim 13 or claim 14, wherein the bearings (63a,63b) in each arm are positioned approximately equidistant about a load centre line through the roller (17).

16. A mechanism as claimed in any one of the preceding claims, wherein a seal (71) is provided between the annular roller (17) and adjacent arm (3), and between said enlarged diameter section (21) and adjacent arm (5).

17. A mechanism as claimed in claim 16, wherein the seal (71) is a V-ring seal.

18. A mechanism as claimed in any one of the preceding claims, wherein a ring seal (73) is provided around the junction between the annular roller (17) and said enlarged diameter section (21).

19. A mechanism as claimed in any one of the preceding claims, wherein a lubrication passage (44,47; 59,61; 69) is provided in the shaft assembly (15) to allow lubricant to be passed to at least the bearing surfaces between the annular roller (17) and cylindrical section (19).

F I G.1

FIG.2

EP 0 331 366 A1

FIG.3

EP 0 331 366 A1

F I G.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 097 495  (VALEO)<br>* Whole document *<br>--- | 1 | F 16 D 65/16<br>F 16 D 55/224 |
| A | DE-A-1 600 140  (A. TEVES GmbH)<br>* Figures *<br>--- | 1 | |
| A | GB-A-1 149 633  (GIRLING LTD)<br>* Figures 1-7 *<br>--- | 1 | |
| A | EP-A-0 124 400  (THE BENDIX CORP.)<br>* Figures 1-4 *<br>--- | 1 | |
| A,P | EP-A-0 260 934  (LUCAS IND. PLC)<br>* Whole document *<br>----- | 1 | |

TECHNICAL FIELDS
SEARCHED (Int. Cl.4)

F 16 D  65/00
F 16 D  55/00

The present search report has been drawn up for all claims

| Place of search | Date of completion of the search | Examiner |
|---|---|---|
| THE HAGUE | 02-06-1989 | BRAEMS C.G.I. |

EPO FORM 1503 03.82 (P0401)